# EUROPÄISCHE PATENTSCHRIFT

(11) **EP 2 703 227 B1**
(45) Veröffentlichungstag und Bekanntmachung des Hinweises auf die Patenterteilung: **24.05.2017**
(21) Anmeldenummer: 13172943.6
(22) Anmeldetag: 20.06.2013
(51) Int. Cl.: B60R 16/02, H02G 3/04

(54) **LANDWIRTSCHAFTLICHE ARBEITSMASCHINE**
AGRICULTURAL WORK MACHINE
MACHINE DE TRAVAIL AGRICOLE

(30) Priorität: 04.09.2012 DE 102012108181
(43) Veröffentlichungstag der Anmeldung: 05.03.2014
(73) Patentinhaber: CLAAS Tractor SAS, 78141 Velizy-Villacoublay (FR)
(72) Erfinder: Gil Tierno, Frédéric, 92310 Sévres (FR); Wagner, Antoine, 92370 Chaville (FR)
(74) Vertreter: Budach, Steffen

(56) Entgegenhaltungen:
- EP-A2- 0 998 000
- DE-A1- 3 435 566
- DE-A1- 3 545 517
- DE-A1- 3 820 724
- DE-A1-102004 023 334
- US-A- 5 739 470

## Beschreibung

Die Erfindung betrifft eine landwirtschaftliche Arbeitsmaschine gemäß dem Oberbegriff des Patentanspruchs 1.

Landwirtschaftliche Arbeitsmaschinen wie beispielsweise Traktoren, Mähdrescher, Feldhäcksler, Pressen oder dergleichen sind mit einer Vielzahl von Funktionselementen ausgestattet, welche - jeweils für sich gesehen oder in Kombination miteinander - dazu beitragen, einzelne Funktionen der Arbeitsmaschine zu erfüllen. Zu diesen Funktionen zählen beispielsweise Antrieb, Lenkung, Bremsen, Überwachung und Steuerung von Arbeitsaggregaten, Beleuchtung der Maschine, Klimatisierung, Navigation, die Kommunikation zwischen Mensch und Maschine etc.. Als Funktionselemente einer landwirtschaftlichen Arbeitsmaschine lassen sich unter anderem Motoren bzw. Aktoren (elektrisch, hydraulisch, pneumatisch, mechanisch), Pumpen, Generatoren, Sensoren, Steuerungs-, Bedien-, Anzeigegeräte, Energie- bzw. Betriebsstoffspeichereinrichtungen (Batterien, Druckbehälter, Kraftstoffbehälter, Wasser-/Öl-/Siliermitteltanks) auffassen.

Aufgrund wachsender Maschinengrößen und steigender Anforderungen hinsichtlich Arbeitseffizienz, Arbeitsqualität, Komfort, Bedienbarkeit verfügen landwirtschaftliche Arbeitsmaschinen heute oftmals über eine komplexe Anordnung von Funktionselementen, die erst in Zusammenwirkung ein gewünschtes Ergebnis erzielen. Dazu ist eine Vielzahl von Leitungen erforderlich, um jeweils ein oder mehrere der Funktionselemente mit einem oder mehreren weiteren Funktionselementen zu verbinden. Je nach Arbeitsweise der zu verbindenden Funktionselemente können die Leitungen der Übertragung von Signalen (Steuerungssignale, Sensorsignale), von Energie (elektrisch, hydraulisch, pneumatisch) und/oder dem Transport von Stoffen (Kraftstoff, Wasser, Öl etc.) dienen. Entsprechend kann es sich bei den Leitungen um verschiedenste Signal-oder Versorgungsleitungen (elektrisch, hydraulisch, pneumatisch, stofflich) handeln.

Die hohe Zahl insgesamt vorhandener Leitungen stellt hohe Anforderungen an eine sachgerechte Verlegung und Anordnung der Leitungen an der Maschine. So muss deren Grundfunktion sicher erfüllt werden, nämlich die Gewährleistung einer sicheren Verbindung der jeweils beteiligten Funktionselemente über einen zu überbrückenden Abstand. Weiterhin muss dies unter sämtlichen Einsatzbedingungen der Arbeitsmaschine gewährleistet sein (äußere Witterungseinflüsse, Arbeitseinflüsse beim Einsatz auf dem Feld (z.B. Erdstöße, Kontakt mit Erntegut), Maschineneinflüsse (z.B. Temperaturentwicklung, Vibrationen, Bewegungen von Maschinenkomponenten).

Bei der Fertigung von Traktoren ist es üblich, mehrere elektrische Leitungen (Kabel), welche beispielsweise zur Verbindung einer elektrischen Bedienkomponente in der Fahrerkabine mit einem elektrischen Steuergerät an der Motor-/Getriebeeinheit dienen, in einem flexiblen Schutzschlauch zusammenzufassen und mittels Befestigungsschellen unterhalb der Fahrerkabine am Getriebegehäuse entlang zu fixieren. Auch für andere Zwecke verlaufen bei Traktoren in dem Bereich zwischen Fahrerkabine und Motor zahlreiche elektrische Leitungen, die in Schutzschläuchen verlegt werden. Eine derartige Art der Führung und Anbringung weist aber verschiedene Nachteile auf.

Da die Schutzschläuche stets in genormter Größe zur Verfügung stehen, haben diese ein begrenztes Fassungsvermögen, d.h. es kann nur eine bestimmte Anzahl an Leitungen darin aufgenommen werden. Für die an einem Traktor unterhalb der Fahrerkabine zu verlegende hohe Zahl von Leitungen bedeutet dies, dass mehrere solcher Schutzschläuche beispielsweise nebeneinander oder gar einander kreuzend angeordnet werden müssen. Dadurch entsteht ein mehrfacher Aufwand bei der Montage, die mit zunehmender Anzahl an Leitungen nicht zuletzt wegen entstehender Unübersichtlichkeit fehlerträchtig ist. Weiterhin erfordert die Anordnung mehrerer Schutzschläuche verhältnismäßig viel Bauraum. Bei starken Motorvibrationen besteht die Gefahr, dass die Schutzschläuche gegeneinander schlagen und so zusätzliche Geräusche verursachen und frühzeitig verschleißen. Eine Reinigung von Verschmutzungen durch Erntegut oder Erdboden nach Arbeitseinsätzen auf dem Feld ist schwierig und nicht gefahrlos.Gehäuseanordnungen für Leitungen sind aus der EP998000A oder der DE3435566A bekannt. Vor diesem Hintergrund ist es Aufgabe der vorliegenden Erfindung, eine Arbeitsmaschine der genannten Art anzugeben, die eine vereinfacht und sicher zu montierende Anordnung von Versorgungs- und/oder Signalleitungen in platzsparender Bauweise bietet.

Die Aufgabe wird gelöst durch eine landwirtschaftliche Arbeitsmaschine mit den Merkmalen des Anspruchs 1. Diese zeichnet sich aus durch eine formstabile, rohrartige Gehäuseanordnung, welche die Leitungen zum Zweck einer Bündelung zumindest abschnittsweise aufnimmt.

Im Unterschied zur bisher bekannten individuellen Fixierung und Führung von Leitungen dient demnach eine gemeinsame Gehäuseanordnung dazu, zumindest abschnittsweise eine Vielzahl (oder sämtliche) der Leitungen gebündelt aufzunehmen. Es besteht erfindungsgemäß der Vorteil erheblicher Bauraumersparnis, da die Gehäuseanordnung zur Aufnahme sämtlicher erforderlicher Leitungen ausgelegt ist. Die Leitungen können nämlich entlang ihres jeweils in der Gehäuseanordnung befindlichen Abschnitts ohne zusätzliche Schutzschläuche von der Gehäuseanordnung aufgenommen werden, wodurch eine besonders dichte Anordnung der Leitungen (bezogen auf den Querschnitt durch die Gehäuseanordnung) möglich ist. Eine herkömmliche aufwendige individuelle Befestigung einzelner Leitungen oder Schutzschläuche mit Befestigungsschellen oder dergleichen lässt sich mit der erfindungsgemäßen Gestaltung durch eine Befestigung der gesamten Gehäuseanordnung an wenigen Befestigungspunkten ersetzen.

Da die Gehäuseanordnung formstabil ausgeführt ist, d.h. die aufgenommenen Leitungen selbstständig trägt ohne unter deren Gewichtslast oder möglicherweise unter deren Rückverformungskräften zu verformen und selbst nach einer Deformierung ihre ursprüngliche Form selbständig wiedereinnimmt, bietet sie ausreichenden physischen Schutz vor mechanischer Außeneinwirkung, Feuchtigkeit, Verschmutzung etc. und ist einfach zu handhaben. Neben der Gewährleistung einer sicheren Leitungsführung wird so auf einfache Weise eine definierte Positionierung und Befestigung an Komponenten der Arbeitsmaschine erreicht, denn durch die Führung in der Gehäuseanordnung ergibt sich unmittelbar mit deren Einbau eine definierte Positionierung und Ausrichtung der Leitungen. Die formstabile Gehäuseanordnung ist vorteilhaft mit einer individuell an den Einbauort an der Arbeitsmaschine angepassten, ihre Form beibehaltende Geometrie hergestellt, wodurch zuvor genannte Vorteile, insbesondere eine hohe Bauraumausnutzung nochmals verstärkt werden.

Mit der rohrartigen Gestaltung der Gehäuseanordnung verlaufen die Leitungen in deren Innerem, wobei die Gehäuseanordnung eine Bündelungsfunktion übernimmt, d.h. sie hält die Leitungen zusammen. Die Gehäuseanordnung mit den davon aufgenommenen Leitungen kann so vorzugsweise als eine montagefähige Baugruppe an einen Einbauort angeliefert und verbaut werden. Durch die damit bereits erfolgte Vorkonfektionierung verringert sich die Fehlerrate beim Verbinden der Leitungen während der Montage erheblich und wird die Montage deutlich erleichtert.

Auf vorteilhafte Weise bildet die Gehäuseanordnung mit darin aufgenommenen Leitungsabschnitten eine im Wesentlichen nach außen geschlossene Struktur, welche die Leitungen im Sinne eines Kabelbaums zusammenhält. Demnach sind die Leitungen durch die Gehäuseanordnung vor Außeneinwirkung (insbesondere: Feuchtigkeit, mechanische Beanspruchung) geschützt und werden zusammengehalten, ohne dass für die Leitungen im Bereich der Gehäuseanordnung weitere Befestigungselemente wie Schellen, Klemmen etc. erforderlich sind. Zweckmäßigerweise weist die Gehäuseanordnung Öffnungen für Leitungseinlässe bzw. -auslässe auf. Weiterhin können bodenseitige Öffnungen zum Ablauf von angesammeltem Wasser vorgesehen sein.

Grundsätzlich ist es denkbar, die Gehäuseanordnung in verschiedenen Formen herzustellen. Zum Einsatz an einer landwirtschaftlichen Arbeitsmaschine bietet es sich an, dass die Gehäuseanordnung bezogen auf deren Längserstreckung einen im Wesentlichen rechteckigen Querschnitt aufweist. Dieser kann über die Länge der Gehäuseanordnung etwa gleich bleiben, wodurch eine einfache Herstellbarkeit gewährleistet ist. Sind abschnittsweise besonders viele Leitungen oder besonders wenig Leitungen von der Gehäuseanordnung aufzunehmen, kann diese auch mit angepasstem Querschnitt hergestellt sein, um einen möglichst kleinen Bauraum zu beanspruchen. Für eine besonders gute Zugänglichkeit zu und Übersichtlichkeit über die darin befindlichen Leitungen bietet es sich an, die rohrartige Gehäuseanordnung im Sinne eines "Flachkanals" auszubilden, das heißt mit einer deutlich größeren Breite als Höhe. Bei derartiger Bauform liegen die Leitungen nämlich überwiegend nebeneinander in dem Kanal, wodurch bei flacher Bauweise eine bessere Übersicht über die Leitungen gegeben ist.

Wie eingangs erwähnt, dienen die Leitungen der Verbindung verschiedenster, voneinander beabstandeter Funktionselemente der Arbeitsmaschine untereinander. Die Leitungen müssen dabei ganz unterschiedliche Entfernungen überbrücken und weisen unterschiedliche Verläufe auf, wobei sie sich beispielsweise überkreuzen, verzweigen oder vereinen können. Damit die Vielzahl an Leitungen einen möglichst geringen Bauraum zwischen den verschiedenen Funktionselementen der Arbeitsmaschine beansprucht und zudem die Leitungen einen sicheren Verlauf einnehmen, weist vorteilhaft die Gehäuseanordnung eine an den Einbauort angepasste Geometrie auf. Das heißt, dass der Verlauf und/oder die Kontur der Gehäuseanordnung gemäß dem Grundsatz "Form folgt Funktion" an bauliche Gegebenheiten angepasst ist, welche für die Führung der Leitungen zur Verfügung stehen. Die Gehäuseanordnung kann beispielsweise (bezogen auf deren Längserstreckung) Krümmungen aufweisen, um die aufgenommenen Leitungen um möglicherweise behindernde Arbeitsaggregate/Funktionselemente der Arbeitsmaschine herum zu führen. Alternativ oder ergänzend kann die Kontur der Gehäuseanordnung individuell auf bauliche Gegebenheiten angepasst sein, indem diese beispielsweise in der Nähe eines beweglichen (oder eines sich erhitzenden) Bauteils der Arbeitsmaschine eine geeignete Aussparung aufweist, um nicht dessen Beweglichkeit einzuschränken (bzw. zur Vermeidung thermischer Beschädigung einen ausreichenden Abstand zu schaffen).

Da die Gehäuseanordnung - je nach Einsatzzweck - eine Länge von deutlich über einem Meter aufweisen kann, ist diese gemäß einer vorteilhaften Weiterbildung mehrteilig ausgeführt, insbesondere indem die Gehäuseanordnung bezogen auf deren Längserstreckung in mehrere miteinander verbindbare Segmente gegliedert ist. Eine solche Ausbildung ermöglicht, dass die Gehäuseanordnung vor der Montage an der Arbeitsmaschine in mehreren kürzeren, zueinander beweglichen Segmenten bereitgestellt werden kann. Die Handhabung, insbesondere für den Transport ist dadurch deutlich erleichtert. Bei Verwendung flexibler Leitungen (z.B. elektrische Kabel) sind die einzelnen Segmente dabei flexibel zueinander beweglich, werden jedoch durch die Leitungen zu einer Baugruppe zusammengehalten.

Zum vereinfachten Einlegen der Leitungen in die Gehäuseanordnung umfasst die Gehäuseanordnung vorzugsweise eine Unterschale und eine Oberschale, wobei die Oberschale mit der Unterschale verbindbar gestaltet ist, so dass Ober- und Unterschale im verbundenen Zustand eine rohrartige Struktur bilden. Auf diese Weise ist eine Schale-Deckel-Anordnung geschaffen, die es ermöglicht, nach Öffnen der Oberschale die Leitungen einfach in die Unterschale einzulegen, um durch anschließendes Schließen die Gehäuseanordnung zu einer rohrartigen Struktur zu schließen.

Die Gehäuseanordnung ist vorzugsweise auf Kunststoff gefertigt. Neben einer einfachen Herstellbarkeit auch aufwendiger Formen ist damit gewährleistet, dass die Gehäuseanordnung bei verhältnismäßig geringem Gewicht eine hinreichende Steifigkeit und Formstabilität aufweist, elektrisch isolierend und nicht korrosionsanfällig ist. Weiterhin lässt sich bei Fertigung aus Kunststoff eine mehrteilige Gehäusestruktur auf einfache Weise verbindbar gestalten, nämlich indem an zu verbindenden Segmenten bzw. Ober- und Unterschalenteilen Schnappverbinder integriert sind.

Während die Gehäuseanordnung vorzugsweise eine im Wesentlichen geschlossene Struktur bildet, sind in dieser zweckmäßigerweise für den Eintritt und Austritt von Leitungen Öffnungen vorgesehen. An die Öffnungen können auch Funktionselemente aller Art (beispielsweise Anschlusselemente wie Stecker/Kupplungen) direkt montiert werden.

Zur Abdichtung gegenüber hindurchgeführten Leitungen können Dichtungselemente vorgesehen sein. Um die Gehäuseanordnung für unterschiedliche Zwecke, insbesondere für unterschiedliche Varianten einer Arbeitsmaschine leicht nutzbar zu gestalten, werden vorgesehene Öffnungen vorzugsweise durch entfernbare Materialabschnitte gebildet. Dies bietet den Vorteil, dass nicht benötigte Öffnungen geschlossen bleiben können, indem ein jeweiliger Materialabschnitt vor der Montage der Gehäuseanordnung gar nicht erst entfernt wird.

Die beschriebene Technik kann bei landwirtschaftlichen Arbeitsmaschinen aller Art zum Einsatz kommen, bei denen eine Vielzahl von Funktionselementen leitungsmäßig zu verbinden sind. So kann es sich bei der Arbeitsmaschine um einen Traktor oder um eine fahrende Erntemaschine wie einen Mähdrescher, Feldhäcksler, Ballenpresse oder dergleichen handeln.

Aufgrund der hohen Zahl an elektrischen Versorgungs- und Steuerungsleitungen (einschließlich Kommunikationsleitungen) unterhalb der Fahrerkabine einer landwirtschaftlichen Arbeitsmaschine bietet es sich an, wenn sich die Gehäuseanordnung bezogen auf eine Längsrichtung der Arbeitsmaschine etwa mittig unterhalb Fahrerkabine befindet und sich etwa von einem hinteren Bereich der Fahrerkabine bis unter einen vorderen Bereich der Fahrerkabine erstreckt.

Gemäß einer vorteilhaften Gestaltungsmöglichkeit, die sich insbesondere bei Traktoren anbietet, ist dabei die Gehäuseanordnung an einer sich unterhalb der Fahrerkabine befindenden Motor- und/oder Getriebeinheit der Arbeitsmaschine befestigt. So ist gewährleistet, dass die Gehäuseanordnung mit darin befindlichen Leitungen schon vor der Montage der Fahrerkabine sicher fixiert ist, während sich die zumeist beweglich gegenüber dem Chassis (Motor- und/oder Getriebeinheit) zu lagernde Fahrerkabine uneingeschränkt bewegen kann.

Wie bereits eingangs erwähnt, kann es sich bei einem Funktionselement um eine Versorgungs-, eine Verbrauchs- und/oder eine Steuerungseinrichtung der Arbeitsmaschine handeln. Dabei ist offen, ob diese elektrisch, hydraulisch, mechanisch und/oder pneumatisch arbeitet.

Entsprechend kann es sich bei einer Leitung um eine Leitung zur Übertragung von Signalen, von Energie und/oder zum Transport von Stoffen (Kraftstoff, Wasser, Öl, Siliermittel, sonstige Hilfsmittel) zwischen Funktionselementen der Arbeitsmaschine handeln. Demzufolge können als Leitungen elektrische Kabel, Hydraulik- oder Pneumatikleitungen oder sonstige Leitungen zum Einsatz kommen. Aufgrund der hohen Anzahl und Komplexität bei der Leitungsführung kommt die Erfindung insbesondere für elektrische Leitungen (im Sinne von Kabeln) zum Einsatz.

Eine bevorzugte Weiterbildung sieht vor, dass in die Gehäuseanordnung weitere Funktionselemente integriert sind. Beispielsweise könnten Relais, Steuergeräte, Kühlrippen und/oder Anschlüsse aller Art direkt in die Gehäuseanordnung integriert sein. Der Gehäuseanordnung kommt dann entsprechend eine weitere, über die Leitungsführung hinausgehende Funktionalität zu.

Die heute vorliegende Komplexität der leitungsmäßigen Verbindung von Funktionselementen an landwirtschaftlichen Arbeitsmaschinen stellt für die Montage eine Herausforderung dar. Zur Fehlervermeidung bei der Führung von Leitungen bildet die Gehäuseanordnung zusammen mit darin aufgenommenen Leitungen vorteilhaft eine montagefähige Baugruppe. Die Gehäuseanordnung mit darin aufgenommenen Leitungen kann in diesem Fall als vorkonfektionierte Baugruppe zur Montagelinie angeliefert werden, welche weitestgehend auf die jeweils zu montierende Variante der Arbeitsmaschine abgestimmt ist. Angesichts der heute bestehenden hohen Variantenvielfalt, die auch eine hohe Vielfalt bei der Leitungsführung bedingt, lässt sich durch eine solche Vorkonfektionierung die Fehlerrate bei der Montage deutlich senken. Dies geschieht schon dadurch, dass für die Montage zunächst nur ein einziges Teil, nämlich die Baugruppe zu handhaben und zu befestigen ist. Es entfällt so eine individuell auf die jeweilige Variante abgestimmte Verlegung von Leitungen einschließlich einzelner Befestigungsschritte.

Durch die vorgeschlagene Technik entsteht nicht zuletzt auch optisch ein besserer Gesamteindruck, da die Vielzahl von Leitungen an der Arbeitsmaschine sauberer geordnet und geführt wird.

Die Erfindung wird im Folgenden anhand eines Ausführungsbeispiels näher erläutert. Daraus ergeben sich auch vorteilhafte Ausgestaltungen und Weiterbildungen. In den nachfolgenden Figuren 1 bis 3 zeigen:
- Fig. 1: eine landwirtschaftliche Arbeitsmaschine in Form eines Traktors in schematischer Seitenansicht,
- Fig. 2: eine Gehäuseanordnung, die an einen Traktor gemäß Fig. 1 angebaut sein kann, in perspektivischer Ansicht,
- Fig. 3: eine Anordnung von Antriebskomponenten eines Traktors einschließlich Getriebebaugruppe und Hinterachsgehäuse eines Traktor gemäß Fig. 1 mit daran befestigter Gehäuseanordnung gemäß Fig. 2 in schematischperspektivischer Ansicht.

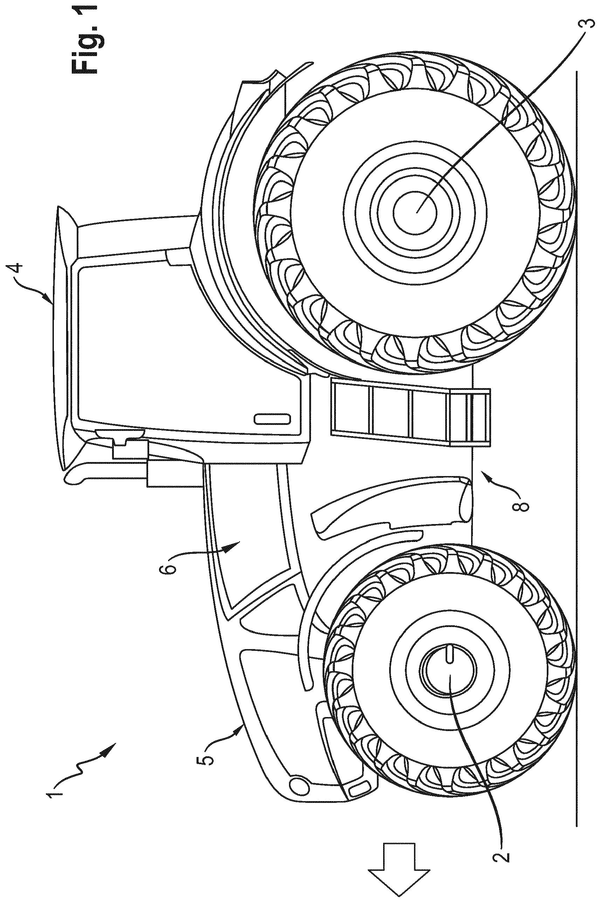

In Fig. 1 ist in Seitenansicht von links ein Traktor 1 gezeigt, dessen Vorwärtsfahrtrichtung mit einem Pfeil angedeutet ist. Der Traktor 1 umfasst eine Vorderachse 2 und eine Hinterachse 3 mit daran montierten Rädern (nicht näher bezeichnet), eine Fahrerkabine 4, eine Motorhaube 5, unterhalb derer ein als Hauptantrieb dienender Motor 6 angeordnet ist, und eine Getriebebaugruppe 8, die antriebsseitig mit dem Motor 6, abtriebsseitig mit der Vorderachse 2 und der Hinterachse 3 verbunden ist, um Antriebsleistung des Motors 6 auf die Achsen 2, 3 zu übertragen.

Der Traktor 1 ist - wie für sich gesehen üblich - mit einer Vielzahl von Funktionselementen ausgestattet. Hierbei kann es um jedwede Art von Einrichtungen handeln, die im weiteren Sinne der Erfüllung von Funktionen des Traktors beitragen, wie beispielsweise Antrieb, Lenkung, Bremsen, Überwachung und Steuerung von Arbeitsaggregaten, Beleuchtung, Klimatisierung, Navigation, Kommunikation zwischen Mensch und Maschine etc.. Als Funktionselemente einer landwirtschaftlichen Arbeitsmaschine lassen sich somit unter anderem Motoren bzw. Aktoren (elektrisch, hydraulisch, pneumatisch, mechanisch), Pumpen, Generatoren, Sensoren, Steuerungs-, Bedien-, Anzeigegeräte, Energie- bzw. Betriebsstoffspeichereinrichtungen (Batterien, Druckbehälter, Kraftstoffbehälter, Wasser-/Öl-/Siliermitteltanks) auffassen. Aufgrund der großen Anzahl vorhandener Funktionselemente sind diese aus Gründen der Übersichtlichkeit in Fig. 1 nicht näher dargestellt bzw. bezeichnet. Zur Erläuterung der Erfindung genügt vielmehr die Vorstellung, dass an einem Traktor wie in Fig. 1 gezeigt eine Vielzahl von Funktionselementen voneinander beabstandet angeordnet ist.

Zur Erfüllung der Funktionalität ist es erforderlich, dass einzelne und/oder mehrere Funktionselemente miteinander in Verbindung stehen, um Signale, Energie und/oder Stoffe untereinander auszutauschen. Der Traktor 1 ist zu diesem Zweck mit einer Vielzahl von Leitungen ausgestattet, bei denen es sich um verschiedenste Signal-und/oder Versorgungsleitungen (elektrisch, hydraulisch, pneumatisch, stofflich) handeln kann. Der Traktor 1 verfügt somit über verschiedene Netze von Leitungen unterschiedlicher Art, die hinsichtlich deren Verläufen und deren Befestigung an der Maschine eine komplexe Struktur bilden.

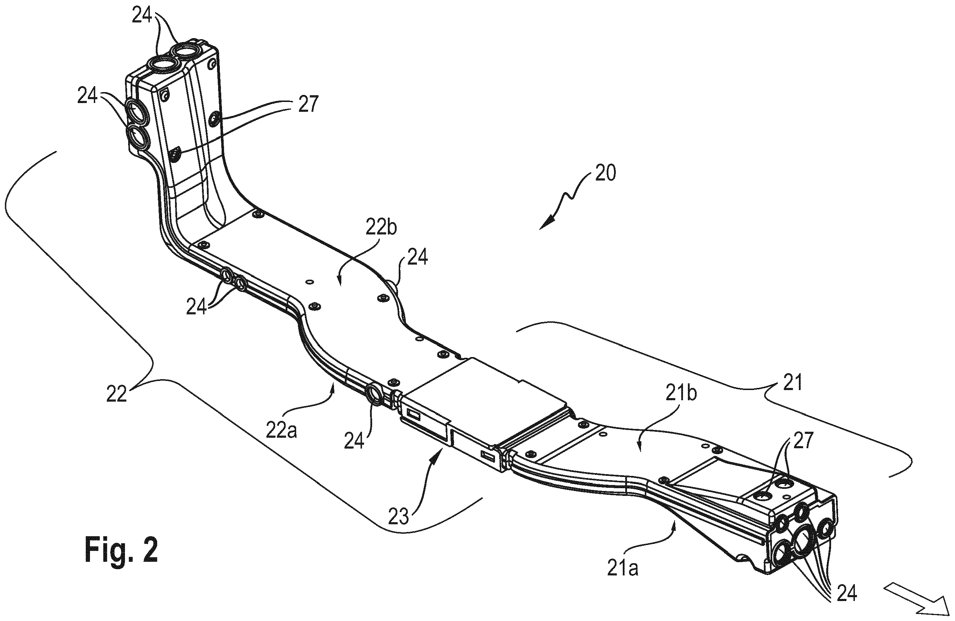

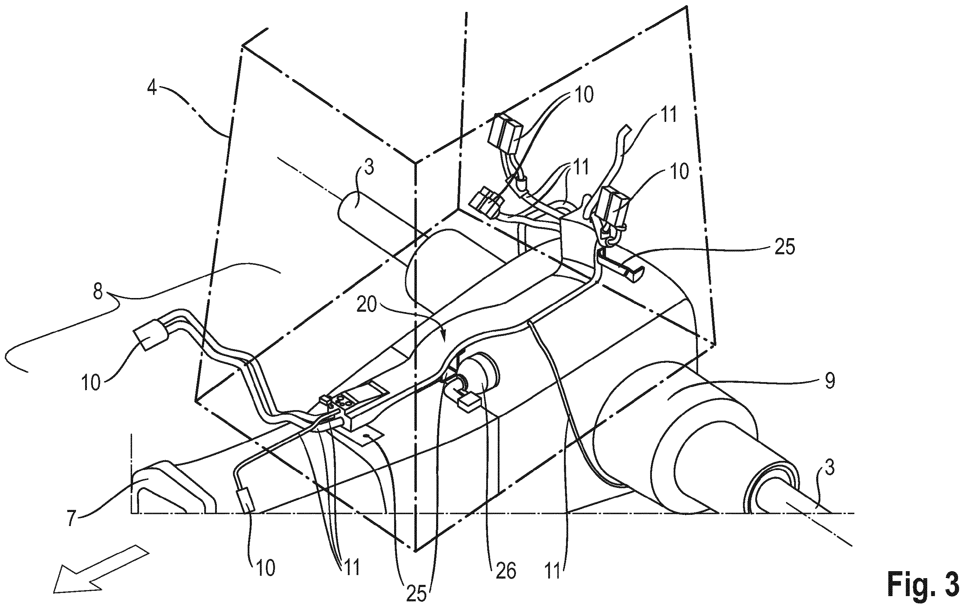

Erfindungsgemäß weist der Traktor 1 gemäß Fig. 1 eine in den Fig. 2 und 3 gezeigte formstabile, rohrartige Gehäuseanordnung 20 auf, welche zumindest einige der genannten Leitungen 11 zum Zweck einer Bündelung zumindest abschnittsweise aufnimmt.

Dabei sei zunächst anhand von Fig. 2 der Aufbau und die Form der Gehäuseanordnung 20 erläutert. Fig. 2 zeigt in perspektivischer Ansicht eine Gehäuseanordnung 20, mit welcher der Traktor 1 gemäß Fig. 1 ausgestattet ist. Die Gehäuseanordnung 20 weist eine sich im Wesentlichen länglich, nämlich in der angedeuteten Pfeilrichtung erstreckende Körperform auf, die im Einbauzustand in den Traktor 1 der Vorwärtsrichtung des Traktors 1 entspricht. Dabei bildet die Gehäuseanordnung 20 eine weitestgehend nach außen geschlossene, rohrartige Struktur, die sich dazu eignet, eine Vielzahl von Leitungen im Sinne eines Kabelbaums zusammenzuhalten. Bezogen auf deren Längserstreckung (Pfeilrichtung) weist die Gehäuseanordnung 20 einen im Wesentlichen rechteckigen Querschnitt in Form eines Flachkanals auf, der eine deutlich größere Breite als Höhe aufweist. Darin aufgenommene Leitungen liegen also vorwiegend nebeneinander, wodurch eine einfachere Zugänglichkeit zu den Leitungen gegeben ist.

Der Verlauf der Gehäuseanordnung 20 ist zwar im Wesentlichen länglich, jedoch ist davon abweichend ein hinterer Endbereich (bezogen auf die Vorwärtsrichtung im Einbauzustand) etwa im 90° Winkel nach oben gekrümmt. Zudem weist die Gehäuseanordnung 20 in einem mittigen Bereich (Bereich der Verbindungsstelle 23) einen seitlichen Versatz auf. Wie in Fig. 3 zu sehen, dient dieser dazu, die Geometrie der Gehäuseanordnung 20 an den konkreten Einbauort am Traktor 1 anzupassen, indem durch den seitlichen Versatz ein vorhandener Druckspeicher 26 umgangen wird.

Die Geometrie der Gehäuseanordnung 20 ist nicht nur hinsichtlich deren Verlaufs an den Einbauort angepasst, sondern auch hinsichtlich deren Kontur, die beispielsweise Aussparungen oder dergleichen aufweisen kann, um von vorhandenen Bauelementen des Traktors 1 beabstandet zu sein. Beispielsweise kann durch geeignete Aussparungen gewährleistet sein, dass trotz naher Anordnung an Lagerungskomponenten die Beweglichkeit einer Fahrerkabine uneingeschränkt möglich ist.

Die in Fig. 2 gezeigte Gehäuseanordnung 20 ist vorzugsweise aus Kunststoff hergestellt und eignet sich in besonderer Weise zur Aufnahme elektrischer Kabel. Die Gehäuseanordnung 20 ist dazu mehrteilig ausgeführt, indem sie bezogen auf deren Längserstreckung in mehrere miteinander verbindbare Segmente 21, 22 gegliedert ist. Dabei ist ein vorderes Segment 21 an einer Verbindungsstelle 23 mit einem hinteren Segment 22 verbunden. Im gezeigten Ausführungsbeispiel wird die Verbindung durch gegenseitige Schnappverbinder hergestellt, die jeweils komplementär zueinander an den Segmenten 21, 22 ausgebildet sind. Aufgrund der Gliederung in zwei voneinander lösbare Segmente 21 und 22 sind - im voneinander gelösten Zustand - die Handhabung und der Transport der Anordnung deutlich erleichtert. Bei bereits eingelegten Leitungen ist gleichzeitig ein Zusammenhalt der Gehäuseanordnung 20 als Baugruppe gewährleistet.

Zum erleichterten Einlegen von Leitungen in die Gehäuseanordnung 20 ist diese weiterhin in der horizontaler Ebene geteilt und umfasst eine Unterschale 21 a, 22a und eine Oberschale 21 b, 22b, die miteinander verbindbar sind. Im geöffneten Zustand, d.h. bei abgehobener Oberschale 21 b, 22b lassen sich Leitungen einfach in die Unterschale 21 a, 22a einlegen, um durch anschließendes Aufsetzen der Oberschale 21 b, 22b die rohrartige Struktur zu schließen.

Die Gehäuseanordnung 20 ist mit einer Vielzahl unterschiedlich großer Öffnungen 24 versehen, durch welche Leitungen eintreten bzw. austreten können. Mehrere Öffnungen 24 sind beispielsweise jeweils stirnseitig vorgesehen. Auch seitlich und/oder oben- bzw. untenseitig können Öffnungen 24 für Leitungsdurchführungen vorgesehen sein. In bevorzugter Ausführung handelt es sich dabei zunächst nur um vorbereitete Öffnungen, die z.B. durch entfernbare Materialabschnitte gebildet sind und erst für den konkreten Einsatzzweck, d.h. für den Einbau an einer konkreten Maschinenvariante entfernt werden. Je nach Ausstattung der Maschine (z. B. Art des Getriebes oder der elektronischen Ausstattung) kann so mit geringem Aufwand eine individuelle Anpassung der Gehäuseanordnung 20 an den jeweils zu nutzenden "Leitungsbaum" erfolgen. Im gezeigten Ausführungsbeispiel ist die Gehäuseanordnung 20 weiterhin mit einer Vielzahl von Öffnungen 27 versehen, die der Befestigung der Gehäuseanordnung 20 an einer landwirtschaftlichen Arbeitsmaschine dienen. Gemäß der Darstellung der Fig. 2 befinden sich je zwei Öffnungen 27 im vorderen und zwei Öffnungen 27 im hinteren Bereich der Gehäuseanordnung 20. Es kann sich bei den Öffnungen 27 auf ähnliche Weise wie bei den Öffnungen 24 um vorbereitete Öffnungen handeln, die erst im Bedarfsfall zum Einsatz kommen.

In Fig. 3 ist nun eine beispielhafte Einbausituation der Gehäuseanordnung 20 am Unterbau eines Traktors gezeigt, wobei aus Gründen der Sichtbarkeit der Gehäuseanordnung 20 vom Traktor nur einige Komponenten des Unterbaus zu sehen ist. Die Vorwärtsrichtung des Traktors ist wieder durch einen Pfeil angezeigt. In schematisch-perspektivischer Ansicht zeigt Fig. 3 Antriebskomponenten eines wie in Fig. 1 gezeigten Traktors, beginnend mit einer Getriebebaugruppe 8, an deren Motorflansch 7 ein (nicht dargestellter) Motor anbaubar ist. Hinter die Getriebebaugruppe 8 schließt sich ein Hinterachsgehäuse 9 an, das die Hinterachse 3 aufnimmt. Durch einen Quader ist zeichnerisch vereinfacht die Position einer Fahrerkabine 4 angedeutet, welche sich bezogen auf die Vorwärtsrichtung etwa mittig über den Antriebskomponenten 8, 9 befindet. Die Fahrerkabine 4 ist - auf für sich bekannte und daher nicht dargestellte Weise - gegenüber dem gezeigten Unterbau federgedämpft gelagert und somit in gewissen Grenzen demgegenüber beweglich.

Eine Gehäuseanordnung 20, wie zuvor zu Fig. 2 beschrieben, befindet sich bezogen auf die Vorwärtsrichtung des Traktors etwa mittig unterhalb der Fahrerkabine 4 und erstreckt sich etwa von einem hinteren Bereich der Fahrerkabine 4 bis unter einen vorderen Bereich der Fahrerkabine 4. Die Gehäuseanordnung 20 nimmt eine Vielzahl elektrischer Leitungen 11 (Kabel) auf, welche unterschiedliche Funktionselemente 10 miteinander verbinden. Bei den Funktionselementen 10 handelt es sich beispielsweise um Steuer- und/Bedieneinrichtungen des Traktors. Durch die Aufnahme der Leitungen 11 bündelt die Gehäuseanordnung 20 diese zu einem vor Feuchtigkeit, Vibrationen und sonstigen mechanischen bzw. physikalischen Einflüssen schützenden Kabelbaum.

Die Gehäuseanordnung 20 ist dazu mittels dreier Befestigungselemente 25, bei denen es sich beispielsweise um passend ausgebildete Blechformteile handeln kann, gegenüber der Getriebebaugruppe 8 und dem Hinterachsgehäuse 9 verbunden. Abhängig von den Abmessungen und allgemeinen Anbringungsbedingungen können davon abweichend selbstverständlich auch mehr oder weniger Befestigungselemente 25 zum Einsatz kommen.

Der Montageaufwand für die Gehäuseanordnung 20, die mit darin aufgenommenen Leitungen 11 eine montagefähige Baugruppe bildet, beschränkt sich jedenfalls zunächst auf die Verbindung mittels der (verhältnismäßig wenigen) Befestigungselemente 25. Anschließend sind die Leitungen 11 mit den jeweils zugehörigen Funktionselementen 10 zu verbinden, was jedoch schon durch die vorgegebene Leitungsführung deutlich vereinfacht ist. Fehler beim Zuordnen und Verbinden der Leitungen 11 sind so erheblich unwahrscheinlicher. Insgesamt sind gegenüber einer herkömmlichen Montage von Leitungen erheblich weniger Teile zu handhaben, da Klammern und sonstige Befestigungseinrichtungen für die Leitungen (sowie weitere damit verbundene Nachteile wie Vibrationsgeräusche, Ablösungen, Korrosion etc.) entfallen.

Innerhalb der Gehäuseanordnung 20 verlaufen die Leitungen 11 nur von deren elektrischer Isolierung umgeben, jedoch ohne weitere Schutzeinrichtungen. Die Gehäuseanordnung 20 weist folglich einen Querschnitt auf, der erheblich geringer ist, als wenn die aufgenommenen Leitungen 11 mit konventionellen Schutzschläuchen umgeben wären. Der erforderliche Bauraum ist daher verhältnismäßig gering. Zum Ablauf von möglicherweise eindringender Feuchtigkeit kann die Gehäuseanordnung 20 in deren Unterschale 22a kleine Ablauflöcher aufweisen.

Die anhand des Ausführungsbeispiels erläuterte Arbeitsmaschine ist als beispielhaft anzusehen. Zahlreiche davon abweichende Ausführungen liegen ebenfalls im Rahmen der Erfindung. Insbesondere sei darauf hingewiesen, dass die Gehäuseanordnung einer landwirtschaftlichen Arbeitsmaschine erfindungsgemäß auch an vielen anderen Positionen angeordnet sein kann, beispielsweise innerhalb einer Fahrerkabine, am Antriebsmotor der Maschine oder im Bereich sonstiger Arbeitsaggregate. Insbesondere bei Anordnung in der Fahrerkabine ist es vorteilhaft denkbar, der Gehäuseanordnung zusätzliche Funktionalitäten zuzuordnen.

**Bezugszeichenliste**

| | | | |
|---|---|---|---|
| 1 | Traktor | 20 | Gehäuseanordnung |
| 2 | Vorderachse | 21 | vorderes Segment |
| 3 | Hinterachse | 21a | Unterschale vorderes Segment |
| 4 | Fahrerkabine | 21b | Oberschale vorderes Segment |
| 5 | Motorhaube | 22 | hinteres Segment |
| 6 | Motor | 22a | Unterschale hinteres Segment |
| 7 | Motorflansch | 22b | Oberschale hinteres Segment |
| 8 | Getriebebaugruppe | 23 | Verbindungsstelle |
| 9 | Hinterachsgehäuse | 24 | Kabeldurchgangsöffnung |
| 10 | Funktionselement | 25 | Befestigungselement |
| 11 | Leitung | 26 | Druckspeicher |
| | | 27 | Öffnung |

## Patentansprüche

1. Landwirtschaftliche Arbeitsmaschine (1) mit einer Vielzahl voneinander beabstandet angeordneter Funktionselemente (10), welche der Bereitstellung technischer Funktionen der Arbeitsmaschine (1) dienen, und einer Vielzahl von Leitungen (11), von denen jeweils eine Leitung (11) ein oder mehrere der Funktionselemente (10) mit einem oder mehreren weiteren der Funktionselemente (10) verbindet, einer formstabilen, rohrartigen Gehäuseanordnung (20), welche die Leitungen (11) zum Zweck einer Bündelung zumindest abschnittsweise aufnimmt, **dadurch gekennzeichnet, dass** die Gehäuseanordnung (20) mehrteilig ausgeführt ist, indem diese bezogen auf deren Längserstreckung in mehrere miteinander verbindbare Segmente (21, 22) gegliedert ist, wobei die Segmente (21, 22) an einer Verbindungsstelle (23) verbunden sind, wobei für den Eintritt und Austritt von Leitungen (11) Öffnungen (24) in der Gehäuseanordnung (20) vorgesehen sind, die durch entfernbare Materialabschnitte gebildet sind, wobei sich die Gehäuseanordnung (20) bezogen auf eine Längsrichtung der Arbeitsmaschine (1) etwa mittig unterhalb einer Fahrerkabine (4) befindet und sich etwa von einem hinteren Bereich der Fahrerkabine (4) bis unter einen vorderen Bereich der Fahrerkabine (4) erstreckt und ein hinterer Endbereich etwa im 90° Winkel nach oben gekrümmt ist.

2. Landwirtschaftliche Arbeitsmaschine nach Anspruch 1, **dadurch gekennzeichnet, dass** die Gehäuseanordnung (20) mit darin aufgenommenen Leitungsabschnitten eine im Wesentlichen nach außen geschlossene Struktur bildet, welche die Leitungen (11) im Sinne eines Kabelbaums zusammenhält.

3. Landwirtschaftliche Arbeitsmaschine nach Anspruch 1 oder 2, **dadurch gekennzeichnet, dass** die Gehäuseanordnung (20) bezogen auf deren Längserstreckung einen im Wesentlichen rechteckigen Querschnitt aufweist.

4. Landwirtschaftliche Arbeitsmaschine nach einem der Ansprüche 1 bis 3, **dadurch gekennzeichnet, dass** die Gehäuseanordnung (20) eine an den Einbauort an der Arbeitsmaschine (1) angepasste, ihre Form beibehaltende Geometrie aufweist.

5. Landwirtschaftliche Arbeitsmaschine nach einem der Ansprüche 1 bis 4, **dadurch gekennzeichnet, dass** die Gehäuseanordnung (20) eine Unterschale (21 a, 22a) und eine Oberschale (21 b, 22b) umfasst, wobei die Oberschale (21 b, 22b) mit der Unterschale (21 a, 22a) verbindbar gestaltet ist, so dass Ober- und Unterschale im verbundenen Zustand eine rohrartige Struktur bilden.

6. Landwirtschaftliche Arbeitsmaschine nach einem der Ansprüche 1 bis 5, **dadurch gekennzeichnet, dass** es sich bei der Arbeitsmaschine um einen Traktor (1) oder um eine Erntemaschine wie einen Mähdrescher, Feldhäcksler, Ballenpresse oder dergleichen handelt.

7. Landwirtschaftliche Arbeitsmaschine nach einem der Ansprüche 1 bis 6, **dadurch gekennzeichnet, dass** die Gehäuseanordnung (20) an einer sich unterhalb der Fahrerkabine (4) befindenden Motor- und/oder Getriebeeinheit (8) der Arbeitsmaschine (1) befestigt ist.

8. Landwirtschaftliche Arbeitsmaschine nach einem der Ansprüche 1 bis 7, **dadurch gekennzeichnet, dass** es sich bei einem Funktionselement (10) um eine Versorgungs-, eine Verbrauchs- und/oder eine Steuerungseinrichtung der Arbeitsmaschine (1) handelt.

9. Landwirtschaftliche Arbeitsmaschine nach einem der Ansprüche 1 bis 8, **dadurch gekennzeichnet, dass** eine Leitung (11) zur Übertragung von Signalen, von Energie und/oder zum Transport von Stoffen zwischen Funktionselementen (10) der Arbeitsmaschine (1) dient.

10. Landwirtschaftliche Arbeitsmaschine nach einem der Ansprüche 1 bis 9, **dadurch gekennzeichnet, dass** in die Gehäuseanordnung (20) weitere Funktionselemente (10) integriert sind.

11. Landwirtschaftliche Arbeitsmaschine nach einem der Ansprüche 1 bis 10, **dadurch gekennzeichnet, dass** die Gehäuseanordnung (20) zusammen mit darin aufgenommenen Leitungen (11) eine montagefähige Baugruppe bildet.

## Claims

1. An agricultural working machine (1) having a plurality of mutually spaced functional elements (10) which serve for the provision of technical functions of the working machine (1), and a plurality of lines (11) of which a respective line (11) connects one or more of the functional elements (10) to one or more further ones of the functional elements (10), a tubular housing arrangement (20) which is stable in respect of shape and which at least portion-wise accommodates the lines (11) for bundling purposes, **characterised in that** the housing arrangement (20) is of a multi-part configuration insofar as in relation to the longitudinal extent thereof it is divided into a plurality of segments (21, 22) which can be connected together, wherein the segments (21, 22) are connected at a connecting location (23), wherein provided in the housing arrangement (20) for lines (11) to pass in and out are openings (24) formed by removable material portions, wherein the housing arrangement (20) is disposed approximately centrally beneath a driver cab (4) with respect to a longitudinal direction of the working machine (1) and extends approximately from a rear region of the driver cab (4) to under a front region of the driver cab (4) and a rear end region is curved upwardly approximately at a 90° angle.

2. An agricultural working machine according to claim 1 **characterised in that** the housing arrangement (20) with line portions accommodated therein forms a substantially outwardly closed structure which holds the lines (11) together in the manner of a cable harness.

3. An agricultural working machine according to claim 1 or claim 2 **characterised in that** the housing arrangement (20) is of a substantially right-angled cross-section in relation to its longitudinal extent.

4. An agricultural working machine according to one of claims 1 to 3 **characterised in that** the housing arrangement (20) is of a geometry which is adapted to the installation location on the working machine (1) and which retains its shape.

5. An agricultural working machine according to one of claims 1 to 4 **characterised in that** the housing arrangement (20) includes a lower shell (21a, 22a) and an upper shell (21b, 22b), wherein the upper shell (21b, 22b) is adapted to be connected to the lower shell (21a, 22a) so that the upper and lower shells in the connected condition form a tubular structure.

6. An agricultural working machine according to one of claims 1 to 5 **characterised in that** the working machine is a tractor (1) or a harvester like a combine harvester, forage harvester, bale press or the like.

7. An agricultural working machine according to one of claims 1 to 6 **characterised in that** the housing arrangement (20) is fixed to an engine and/or transmission unit (8) of the working machine (1), that is beneath the driver cab (4).

8. An agricultural working machine according to one of claims 1 to 7 **characterised in that** a functional element (10) is a supply, a consumer and/or a control device of the working machine (1).

9. An agricultural working machine according to one of claims 1 to 8 **characterised in that** a line (11) serves for the transmission of signals, power and/or for transporting substances between functional elements (10) of the working machine (1).

10. An agricultural working machine according to one of claims 1 to 9 **characterised in that** further functional elements (10) are integrated in the housing arrangement (20).

11. An agricultural working machine according to one of claims 1 to 10 **characterised in that** the housing arrangement (20) together with lines (11) accommodated therein forms a ready-to-fit assembly.7

## Revendications

1. Machine de travail agricole (1) comprenant une pluralité d'éléments fonctionnels (10) qui sont disposés à distance les uns des autres et qui servent à remplir des fonctions techniques de la machine de travail (1), et comprenant une pluralité de lignes (11) dont chaque ligne (11) relie un ou plusieurs des éléments fonctionnels (10) à un ou plusieurs autres des éléments fonctionnels (10), comprenant un agencement de boîtier indéformable tubulaire (20) qui loge les lignes (11) au moins par portions dans le but de les regrouper, **caractérisée en ce que** l'agencement de boîtier (20) est conçu en plusieurs parties par le fait qu'il est divisé par rapport à son extension longitudinale en plusieurs segments reliables entre eux (21, 22), les segments (21, 22) étant reliés en un point de liaison (23), des ouvertures (24) formées par des portions de matière amovibles étant prévues dans l'agencement de boîtier (20) pour entrer et sortir des lignes (11), l'agencement de boîtier (20) se trouvant, par rapport à une direction longitudinale de la machine de travail (1), sensiblement au centre sous une cabine de conduite (4) et s'étendant sensiblement depuis une zone arrière de la cabine de conduite (4) jusque sous une zone avant de la cabine de conduite (4), et une zone arrière extrême étant courbée vers le haut sensiblement selon un angle de 90°.

2. Machine de travail agricole selon la revendication 1, **caractérisée en ce que** l'agencement de boîtier (20) avec les portions de lignes logées à l'intérieur forme une structure sensiblement fermée vers l'extérieur, laquelle rassemble les lignes (11) à la façon d'un faisceau de câbles.

3. Machine de travail agricole selon la revendication 1 ou 2, **caractérisée en ce que** l'agencement de boîtier (20) présente, par rapport à son extension longitudinale, une section transversale sensiblement rectangulaire.

4. Machine de travail agricole selon une des revendications 1 à 3, **caractérisée en ce que** l'agencement de boîtier (20) présente une géométrie qui est adaptée à l'emplacement de montage sur la machine de travail (1) et qui conserve sa forme.

5. Machine de travail agricole selon une des revendications 1 à 4, **caractérisée en ce que** l'agencement de boîtier (20) comprend une coque inférieure (21a, 22a) et une coque supérieure (21b, 22b), la coque supérieure (21b, 22b) étant conçue pour être reliable à la coque inférieure (21a, 22a), de façon que, à l'état relié, les coques supérieure et inférieure forment une structure tubulaire.

6. Machine de travail agricole selon une des revendications 1 à 5, **caractérisée en ce que** la machine de travail est constituée par un tracteur (1) ou par une machine de récolte comme une moissonneuse-batteuse, une ensileuse, une presse à balles ou analogue.

7. Machine de travail agricole selon une des revendications 1 à 6, **caractérisée en ce que** l'agencement de boîtier (20) est fixé à une unité de transmission (8), située au-dessous de la cabine de conduite (4), de la machine de travail (1).

8. Machine de travail agricole selon une des revendications 1 à 7, **caractérisée en ce qu'**un élément fonctionnel (10) est constitué par un dispositif d'alimentation, d'exploitation et/ou de commande de la machine de travail (1).

9. Machine de travail agricole selon une des revendications 1 à 8, **caractérisée en ce qu'**une ligne (11) sert à transmettre des signaux, de l'énergie et/ou à transporter des substances entre des éléments fonctionnels (10) de la machine de travail (1).

10. Machine de travail agricole selon une des revendications 1 à 9, **caractérisée en ce que** d'autres éléments fonctionnels (10) sont intégrés dans l'agencement de boîtier (20).

11. Machine de travail agricole selon une des revendications 1 à 10, **caractérisée en ce que** l'agencement de boîtier (20) forme, avec des lignes (11) logées à l'intérieur, un sous-ensemble prêt à la pose.
